Europäisches Patentamt

European Patent Office

Office européen des brevets

(11) Publication number: **0 487 812 A2**

# EUROPEAN PATENT APPLICATION

(21) Application number: **91102246.5**

(22) Date of filing: **18.02.91**

(51) Int. Cl.5: **H02H 9/06**, H02H 7/00

(30) Priority: **26.11.90 IT 2218590**

(43) Date of publication of application:
**03.06.92 Bulletin 92/23**

(84) Designated Contracting States:
**AT BE CH DE DK ES FR GB IT LI NL SE**

(71) Applicant: **PASSONI E VILLA FABBRICA ISOLATORI E CONDENSATORI S.p.A.**
**Viale Suzzani, 229**
**Milano(IT)**

(72) Inventor: **Poletti, Franco**
**via Filippo Juvara, 26**
**Milan(IT)**

(74) Representative: **Klausner, Erich et al**
**c/o Ufficio Internazionale Brevetti Ing. C.**
**Gregorj S.p.A. Via Dogana 1**
**I-20123 Milano(IT)**

(54) **Phase - phase coupling device for medium voltage networks.**

(57) Phase - phase coupling deice for medium voltage networks comprising an isolating transformer one branch of the primary winding of which is connected to at least one inductor in series with a coupling capacitor where at least a discharger connecting the two phases is provided between the inductor and the coupling capacitor.

Fig. 2

This invention relates to phase - phase coupling devices for medium voltage (MV) networks.

Coupling devices of this type are usually provided for the installation in primary cabins, in secondary MV (medium voltage) cabins, in MV/LV (low voltage) and MV user cabins.

Through a branched remote control system between the primary and secondary cabins, the Electricity Board, by utilizing the medium voltage lines, can deliver signals relating to the typical characteristic parameters of the network, such as voltage, current, frequent and power, energy absorption and other similar parameters from the single secondary cabins and send them to the primary cabins,where data acquisition systems can manage and control remotely the different parameters referred to hereinabove, and measure the user parameteers tapped in 24 hours to permit, among other things, a differentiated rate according to the utilization time zone.

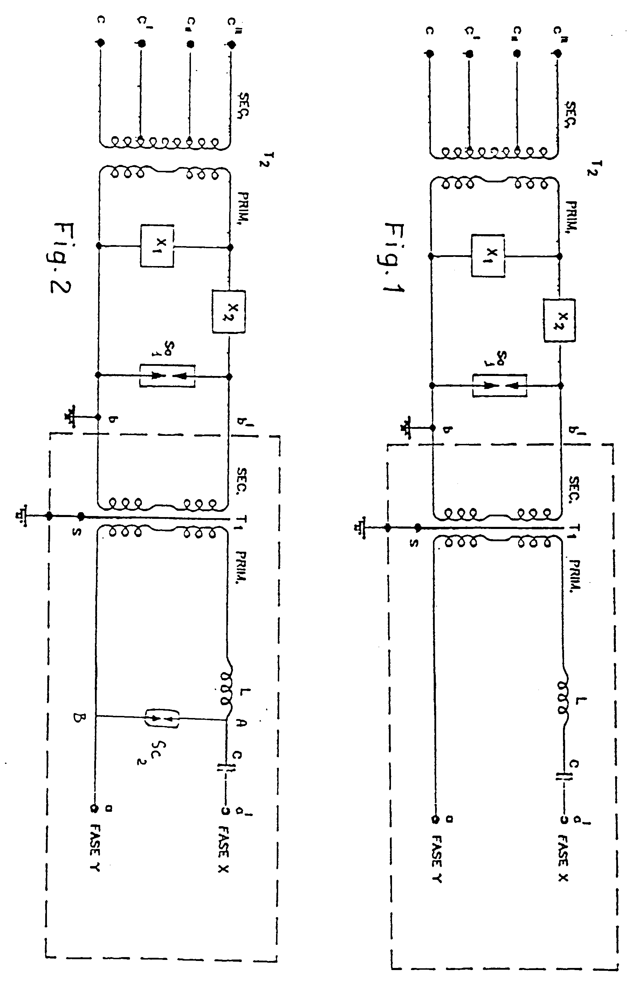

Annexed fig 1 illustrates the electric diagram and components of a traditional coupling device for secondary cabins.

The low voltage section shown in the diagram contemplated the use of an impedance translator $T_2$, the primary winding of which is connected to the secondary winding of an isolating transformer $T_1$.

A compensating reactance $X_1$ can be connected to the two ends of a primary, whilst a second compensating reactance $X_2$ can be linked to one end of the primary winding of impedance translator $T_2$. The dashed enclosure corresponds to the part modified based on the teachings of this invention and which, in the traditional embodiment, includes said isolating transformer $T_1$, an inductor L and a coupling capacitor C which are the energized elements of the device considered, whilst the other elements are galavanically isolated and connected to ground.

The coupling capacitor, the tuning inductor and the isolating transformer must at the present state of the art, be designed to withstand the voltages and stresses as a function of the safety which must be guaranteed on taps b and b'.

In normal operation at 50 Hz, the voltage is almost entirely borne by capacitor C the impendance of which is enormously higher than that of inductor L, whilst for the signals at transmission and reception frequency, capacitor C and inductor L are in resonance, hence have an almost null impedance.We therefore have a very low signal attenuation on chain L-C.

The isolating transformer $T_1$ and the inductor L are instead affected by high voltage only in case of impulsive overvoltages originating from phases X-Y, for example, maneuvering waves or lightning.

For this reason, in the traditional type construction, isolating transformer $T_1$ and indcutor L must be electrically sized for the corresponding voltage class, which makes it very difficult to meet signal transmission requirements.

The purpose of this invention is to reduce the excessive dimensions ofthe isolating transformer as well as its weight and cost. This is achieved by the interposition of a single discharger or spark gap in parallel with the isolating transformer and with the tuning inductor in series at the junction point between the latter and the coupling capacitor or, in combination with a second discharger in parallel with the inductor.

This invention will be illustrated and described more in detail in conjunction with annexed figures 2 to 6, which provide five examples of embodiment of the invention.

Figs 2-6 indicate, with the same references, the common components both in the traditional embodiment and in the embodiment according to the present invention.

In the embodiment of fig 2, showing a coupling device for a secondary cabin with discharger on the MV side, in the medium voltage (MV) section, a discharger or spark gap $SC_2$ is inserted in parallel between parts A and B on phase lines X and Y between the inductor and the coupling capacitor.

With this solution, providing a discharger fitted between points A and B,that is across the isolating transformer and the tuning inductor fitted in series, the overvoltages from phases X and Y are limited; it is therefore avoided that said overvoltages will involve these two components as a result of which the dimensions of isolating transformer T and inductor L can be drastically reduced.

The only component that will have to withstand the overvoltage is the capacitor. In this way, both transformer $T_1$ and inductor L can be isolated hence sized for a much lower voltage, thereby consenting a considerable saving in material, in addition, to reducing costs and all overall dimensions as well as improving operation at the signal frequency.

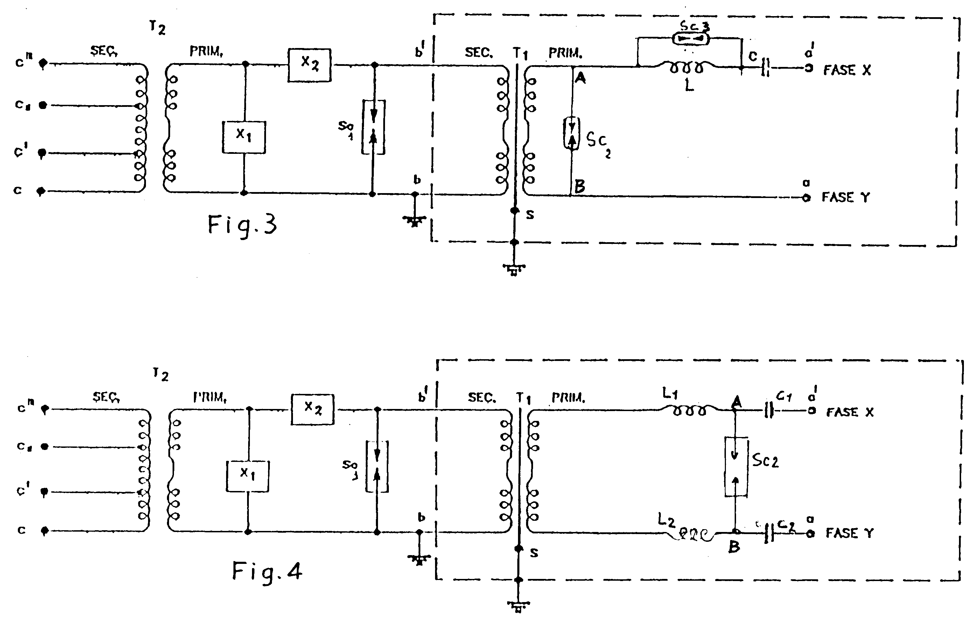

In the second embodiment of fig 3 showing a coupling device for a secondary cabin with discharger on the MV side, a second discharger $SC_3$ is provided in parallel with inductor L in addition to a discharger $SC_2$ fitted in parallel between points A and B on phase lines X and Y between the tuning inductor and the isolating transformer.

The third form of embodiment of this invention relating to a coupling device for secondary cabins whith balanced circuits and MV discharger, as shown in fig 4, is similar to that of fig 2 and contemplates a specularity between the line of phase X and that of phase Y i.e. on the phase Y line are provided an inductor $L_2$ and a capacitor $C_2$ equal to inductor $L_1$ and to capacitor $C_1$ inserted in

the line of phase X between which pairs a discharger SC$_2$ is fitted.

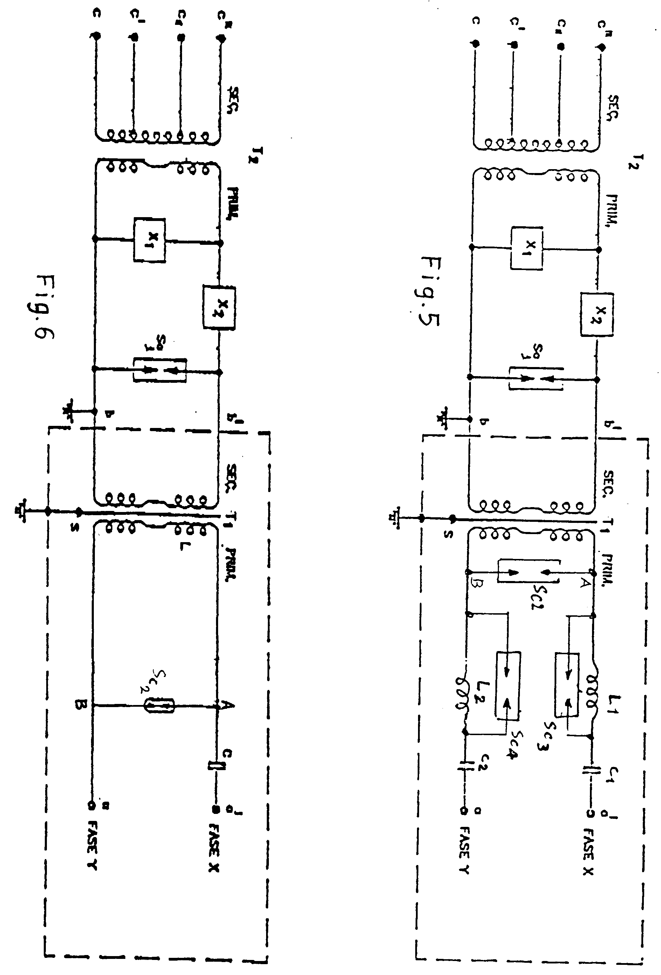

The fourth embodiment of this invention relating to a coupling device for secondary cabins with balanced inductance and MV dischargers as illustrated in fig 5 contenplates a specularity between lines of phase X and that of phaseY i.e. on the line of phase Y are fitted an inductor L$_2$ a discharger SC$_4$ inserted in parallel equal to inductor L$_1$ and discharger SC$_3$ inserted on the line of phase X, the two inductor/discharger pairs being fitted between the connecting points of the primary winding of the isolating transformer and the respective coupling capacitors C$_1$ - C$_2$. It is possible also to apply a single coupling capacitor C in the line of one phase.

The fifth embodiment illustrated in fig 6, as a variant of fig 2, shows a coupling device for secondary cabins with discharger on the MV side, in the medium voltage (MV) section,in which, a discharger SC$_2$ in parallel between points A and B on phase lines X and Y, is fitted ahead of the coupling capacitor. In this variant, the tuning inductance L is incorporated in that of isolating transformer T$_1$ exploiting the flux dispersed in the magnetic circuit.

tance is incorporated in that of the transformer, exploiting the flux dispersed in the magnetic circuit (fig 6).

**Claims**

1. Phase - phase coupling device for medium voltage (MV) networks comprising an isolating transformer, a branch of the primary winding of which is connected to at least one inductor in series with a coupling capacitor, characterized in that at least one discharger connecting the two phases is provided between the inductor and the coupling condenser (fig 2).

2. Phase - phase coupling device according to claim 1, characterized in that a discharger is connected in parallel to the inductor whilst another discharger is connected to the primary winding of the isolating transformer (fig 3).

3. Phase - phase coupling device according to claim 1, characterized in that each one of the lines of the two phases comprises an inductor in series and a coupling capacitor, a discharger being inserted between the connection points of the inductor/capacitor pairs (fig 4).

4. Phase - phase coupling device according to claim 3 characterized in that one discharger is fitted in parallel to the primary of said isolating transformer, whilst another two are connected in parallel with the pair of inductors (fig 5).

5. Phase - phase coupling device according to claim 1, characterized in that the tuning induc-

Fig.1

Fig.2

4

Fig. 4

Fig. 3

Fig.6

Fig.5